# EUROPEAN PATENT APPLICATION

(11) **EP 2 448 175 A1**
(43) Date of publication of application: **02.05.2012**
(21) Application number: 10791281.8
(22) Date of filing: 28.04.2010
(51) Int. Cl.: H04L 12/24, H04W 24/02

(54) **METHOD FOR COMMUNICATION SYSTEM SERVICE UPGRADE AND UPGRADE CONTAINER DEVICE THEREOF**

(30) Priority: 25.06.2009 CN 200910148672
(71) Applicant: ZTE Corporation, Shenzhen, Guangdong 518057 (CN)
(72) Inventor: WU, Xiaobin, Shenzhen Guangdong 518057 (CN); ZHONG, Jian, Shenzhen Guangdong 518057 (CN); NIE, Rongchu, Shenzhen Guangdong 518057 (CN)
(74) Representative: Sander Jakobsson, Sofia Ellinor
(86) International application number: PCT/CN2010/072298
(87) International publication number: WO 2010/148775

(57) **Abstract**

The invention provides a method for a communication system service upgrade, including: when a communication device prepares to be upgraded, an upgrade container device buffering message which currently needs to be sent to other network elements by the communication device into a sending buffer, and, when the communication device prepares to be upgraded and in an upgrade process, the upgrade container device receiving message which is transmitted to the communication device by other network elements and buffering the message into a receiving buffer; the upgrade container device sending the message in the sending buffer to destination network elements; thereby realizing an upgrade without interruption. The invention also provides an upgrade container device supporting the communication system service upgrade.

## Description

### Technical Field

The invention relates to the communication field, more specifically, to a method for communication system service upgrade and an upgrade container device.

### Background of the Related Art

Communication programs need to operation a whole day without interruption, thereby it demands a high level of program reliability, the interruption of service caused by program crash and version upgrade can affect the reliability and availability of the communication program.

A general upgrade process of communication program is: to interrupt an old version program first, and then replace with a new version program, at last restart the new version program, complete the upgrade process. During the upgrade process, the interruption of service inevitably exists. If using a master-standby scheme, when the communication program of the master device upgrades, the service must be switched to the standby first, then switched back to the master after the upgrade of the master is finished, an upgrade without interrupting the service is basically realized. But this method requires two sets of mutually redundant equipments to form a master-standby scheme, the cost of the equipments in the system is high, and when switching between the master and the standby, the corresponding computer resources are required to be switched between the master and the standby, a temporary interruption of service also exists.

### Summary of the Invention

The technical problem to be solved in the present invention is to provide a method for a communication system service upgrade and an upgrade container device, realizing an upgrade of communication device without a standby device and without interrupting the service which is undertaken by the communication device.

In order to solve the above problem, the invention provides a method for a communication system service upgrade, comprising:
when a communication device prepares to be upgraded, an upgrade container device buffering message which is currently needed to be sent to other network elements from the communication device in a sending buffer, and, when the communication device prepares to be upgraded and during an upgrade process, the upgrade container device receiving message which are transmitted to the communication device by other network elements and buffering the message in a receiving buffer;
the upgrade container device sending the message in the sending buffer to destination network elements;
thereby realizing an upgrade without interruption.

The above method further comprises: the upgrade container device transmitting the message in the receiving buffer to the communication device after the upgrade of the communication device is finished.

The above method further comprises: an upgrade container device snapshooting and saving the service data during the operation of the communication device before the communication device prepares to be upgraded and interrupt the service which is running;
the upgrade container device transmitting the saved service data to the communication device after the upgrade of the communication device is finished; the communication device recovering the received service data, and starting the interrupted service.

Wherein, the step of the upgrade container device snapshooting and saving the service data during the operation of the communication device comprises: saving the corresponding data structures under a running status of the communication device by entire segment into memory.

The above method further comprises: when the communication device is in a normal running status, the upgrade container device performing a forwarding function only for interaction message between the communication device and other network elements.

The invention further provides an upgrade container device supporting the communication system service upgrade, the upgrade container device is configured to:
buffer the message which currently need to be sent to other network elements by the communication device in a sending buffer when a communication device prepares to be upgraded;
receive message which are transmitted to the communication device by the other network elements, buffer the message in a receiving buffer when the communication device prepares to be upgraded and during the upgrade process; and,
send the message in the sending buffer to the destination network elements;
thereby realizing an upgrade without interruption.

Wherein, the upgrade container device is further configured to: send the message in the receiving buffer to the communication device after the upgrade of the communication device is finished.

Wherein, the upgrade container device is further configured to: snapshoot and save the service data during the operation of the communication device before the communication device prepares to be upgraded and interrupt the service which is running; and, transmit the saved service data to the communication device after the upgrade of the communication device is finished, so that the communication device recovers the service data and starts the interrupted service.

Wherein, the upgrade container device comprises a service data snapshot memory area;
the upgrade container device is configured to save the corresponding data structures under a running status of the communication device by entire segment into the service data snapshot memory area before the communication device prepares to be upgraded and interrupt the service which is running.

Wherein, the upgrade container device is further configured to perform a forwarding function for interaction message between the communication device and the other network elements when the communication device is in a normal running status.

The invention can realize an upgrade without interruption of communication device service, in the process of upgrading, the communication device waiting to be upgraded is taken over and protected by the upgrade container. Before the upgrading of the communication device, the upgrade container snapshots and saves the service data during the running of the communication device; when the upgrade of communication device is interrupted, the upgrade container is in charge of taking over sending and receiving all of the message, proceeding to send the message to adjacent network elements and buffer the received message to handle after the upgrading of the communication device is finished. Under the control and protection of the upgrade container, the upgrade process of communication device is invisible to other network elements, the message interaction with the other network elements will also not be interrupted; the time point of communication device upgrade is configured at a time period with the least service amount in a day. Thus, only the message amount buffered in the upgrade container is little, and the message can be handled quickly after the upgrade is finished, there in no service interruption during the whole process of upgrading, thereby an upgrade without interruption of communication device service is realized.

### Brief Description of Drawings

FIG.1 is a structural diagram of an upgrade system without interrupting the communication device service;
FIG.2 is a work flow chart of an upgrade system without interrupting the service;.

### Preferred Embodiments of the Present Invention

The invention mainly uses the following technical schemes:
providing a set of upgrade container device (hereinafter referred to as upgrade container), deploying a communication device in the upgrade container;
when the communication device is running normally, the upgrade container is in a status of dormancy, which is invisible to the communication device deployed in the upgrade container and adjacent communication nodes (network elements);
when communication device needs to be upgraded, the upgrade container takes over the control power of the communication device, snapshots and saves the service data during the operation of the communication device, meanwhile buffers the message which currently needs to be sent to other network elements by the communication device into a sending buffer; in this text, the communication device upgrade includes an upgrade of a communication program on the communication device;
in the upgrade process of the communication device, the upgrade container continues to send the message in the sending buffer to the adjacent network elements, meanwhile continues to receive the message from the adjacent network elements and save the message into the receiving buffer;
after the communication device upgrade is finished, the new upgraded version of the communication device recovers the service data saved in the upgrade container, and starts to undertake services normally, when the message in the sending buffer has been all sent to the adjacent network elements and the message in the receiving buffer has been all sent to the communication device, the upgrade container enters into the state of dormancy again, waits for next operation of upgrading.

Wherein, the snapshot service data mainly includes: current configuration data of the communication device, current values used to record all variables in the running state in the communication device, processing states of service message which is currently processed and the temporary data which is used in the communication device, and current values used to record all variables in the interaction status with the other network elements an so on.

The operation of upgrading container for snapshooting the service data during the running includes but is not limited to: configuring a service data snapshot memory area in memory, saving the service data during the operation of the communication device by storing the corresponding service data structures of the communication device by entire segment into the memory area; after the upgrading of the communication device is finished, sending the saved data structures read from the memory area to the communication device for recovery.

In thee following, the technical scheme of the invention is further described in details in combination with the drawings and specific examples.

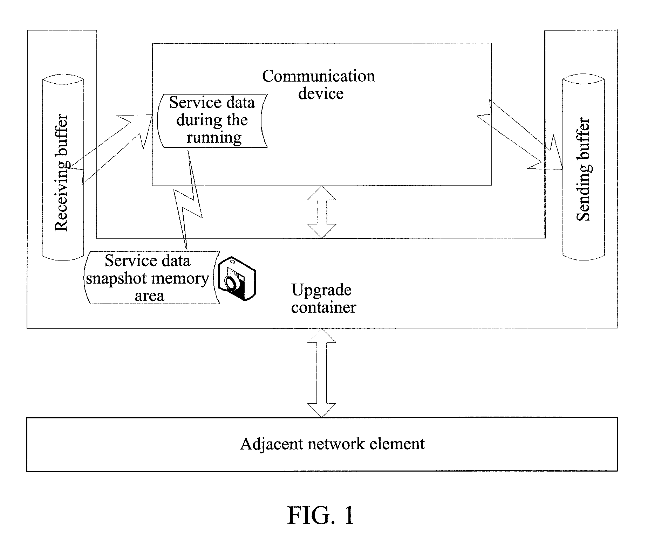

The main framework structure of the upgrade system without interrupting the communication device service of the example in the invention is shown in FIG.1, the system mainly includes an upgrade container device and a communication device (on which a communication program is running): the upgrade container is used to take over and protect the service undertaken by communication device to avoid an interruption in the upgrade process; the communication device is a program undertaking the communication service in the communication network.

Wherein, an upgrade container and a communication device are independent of each other, they can be flexibly deployed on an identical physical device to save costs and be set on different physical devices to make the system achieve the maximum reliability and performance.

The upgrade container device can be realized by software, or it can be realized by hardware and firmware, and it also can be realized by a combination of software and hardware.

With reference to FIG.1, an upgrade container of the example further includes:
a service data snapshot memory area, which is used to save the corresponding service data structures during the running of the communication device by entire segment into the service data snapshot memory area when snapshooting the service data during the running of the communication device.
a sending buffer, which is used to buffer the message which currently needs to be sent to other network elements by communication device; when the communication device needs to be upgraded, the upgrade container buffers the message which currently needs to be sent to other network elements by the communication device into the sending buffer, and sends the message in the sending buffer to the destination network elements during the upgrade process;
a receiving buffer, which is used to buffer the message which is transmitted to the communication device by the other network elements, in the upgrade process of the communication device, the upgrade container buffers the received message which are transmitted to the communication device by the other network elements into the receiving buffe, and after the communication device upgrade is finished, sends the message in the receiving buffer to the communication device.

There are two kinds of running status in the system without interrupting the service in this example: a normal running status and an upgrade running status. When the system is in the normal running status, the communication device operates normally, and it acts as a network element in the communication network to undertake the corresponding service, the upgrade container is in a state of dormancy when operating normally; when the communication device needs to be upgraded, the system enters into the upgrade running status, now the upgrade container obtains the control power of the system, takes over the communication device in the upgrade process of the communication device, and acts as a network element existing in the communication network.

Wherein, when the system is in the normal running status, the upgrade container is invisible to the communication device and its adjacent network elements, the communication device operates independently, the message between the communication device and the adjacent network elements are transmitted transparently through the upgrade container without any processing by the upgrade container, the buffers for receiving and sending the message and the service data snapshot memory area in the upgrade container are all empty;
when the system enters into the upgrade status, the upgrade container possesses the control power of the communication device, the interaction message between the communication device and the adjacent network elements are respectively saved in the receiving buffer and the sending buffer; the communication device is not working but entering into an upgrade operation, the upgrade container snapshoots the data during the running of the service before the communication device entering into the upgrade operation, in order to make the communication device recover instantly to the running status before the upgrade after the upgrade is finished.

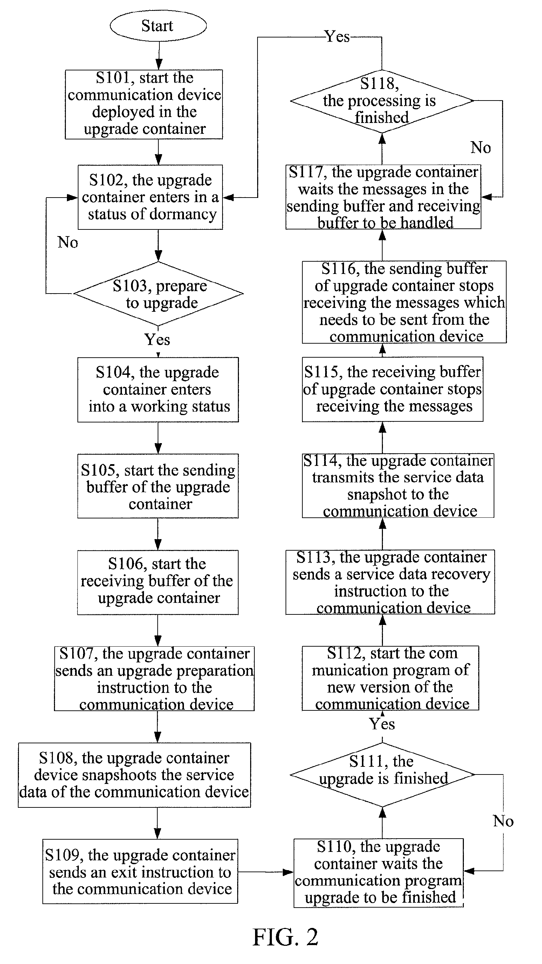

In the following, the upgrade method without interrupting the communication device service in the example of the invention is described in details in combination with FIG. 2, as shown in FIG.2, including the following steps:
Step S101, when starting the system for the first time, firstly it starts the upgrade container, then the upgrade container starts the communication device deployed in the upgrade container;
   after the communication device is started, it enters into the normal operation status, acts as a network element in the communication network, and undertakes corresponding services.
Step S102, when the communication device enters into the normal working status, the upgrade container enters into a state of dormancy;
   at this moment, the message interaction between the communication device and the other network elements does not pass through the message buffer of the upgrade container, but is transmitted transparently by the upgrade container.
Step S103, the upgrade container regularly detects whether the upgrade configuration item is turned on, the upgrade configuration item is configured by user operation maintenance unit of the system, if the upgrade container does not detect the upgrade configuration item is turned on, then it continues to be dormant, returning to the step S102; if the upgrade container detects the upgrade configuration item is turned on, it will perform an upgrade operation, then performing step S104;
Step S104, the upgrade container exits the state of dormancy, enters into the working status, starts to take over the communication device deployed in it;
Step S105, starts the sending buffer of the upgrade container, the message which is transmitted to the other network elements by the communication device is no longer transmitted transparently by the upgrade container, but saved in the sending buffer of the upgrade container, then transmitted to the destination network elements by the upgrade container;
Step S106, starts the receiving buffer of the upgrade container, the message which is transmitted to the communication device by all the other network elements is no longer transmitted transparently by the upgrade container, but saved in the receiving buffer of the upgrade container, then transmitted to the communication device by the upgrade container;
   In the step, the upgrade container can use the prior art, such as configuring the IP, etc, to receive the message which is transmitted to the communication device from the other network elements, the processing procedures of the other network elements are not affected.
Step S107, the upgrade container sends an upgrade preparation instruction to the communication device;
   after receiving the upgrade preparation instruction, the communication device stops processing the service, as the receiving buffer and sending buffer of the upgrade container have taken control of receiving and sending the message of the communication device, so the communication device stops processing communication service at this time, this process is invisible to other adjacent network elements, thereby it has no effect to the other network elements.
Step S108, the upgrade container device snapshoots the service data during the running of the communication device and saves them into the service data snapshot memory area;
Step S109, the upgrade container sends an exit instruction to the communication device;
   the communication device exits after receiving the exit instruction, the upgrade technicians perform the upgrade operation of the communication device. The process of upgrade operation of the communication device is not the research content of the present invention, and will not be described in details here any more.
Step S110, the upgrade container waits for the communication device upgrade to be finished;
Step S111, after the communication device upgrade is finished, the upgrade technicians turn on the complete upgraded configuration item through the user operation and maintenance unit of the system; the upgrade container equipment regularly detects whether the complete upgraded configuration item is turned on, if turned on, it represents the upgrade operation of the communication device has been finished, moving to the next step S1112; if not, returning to the step S110;
Step S112, the upgrade container starts the communication device of a new version, the communication device waits for receiving service data snapshot after it has been started;
Step S113, the upgrade container sends a service data recovery instruction to the communication device;
Step S114, the upgrade container transmits the service data snapshot during the running saved before the upgrade to the communication device;
   after receiving the service data snapshot during the running, the communication device recovers the data, then starts to operate normally, takes over the corresponding work in the communication network.
Step S115, the receiving buffer of the upgrade container stops receiving message from external network elements, the message which is sent to the communication device by the external network elements is directly and transparently retransmitted to the communication device by the upgrade container; meanwhile the upgrade container continues to send the rest of the message in the receiving buffer to the communication device for handling;
Step S116, the sending buffer of the upgrade container stops receiving message which needs to be sent from the communication device, the message which is sent to the external network elements by the communication device is directly and transparently transmitted to the destination network elements by the upgrade container, the upgrade container continues to send the rest of the message in the sending buffer to the external network elements;
Step S117, the upgrade container waits for the message in the sending buffer and receiving buffer to be handled;
Step S118, the upgrade container judges whether all the message in the sending buffer and receiving buffer have been handled, if yes, returning to the step S102, it enters into a state of dormancy again, waits for the next upgrade operation; otherwise, returning to the step S117.

Obviously, the skilled in the art should understand, each module and step of the invention mentioned above can be realized through universal calculating devices, they can be on a single calculating device together, or distributed in a network composed of a plurality of calculating devices, alternatively, they can be realized by the executable program code of the calculating device, thus, they can be stored in the storage device and performed by the calculating device, or they can be respectively made into different integrated circuit modules, or a plurality of modules or steps of them can be made into a single integrated circuit module to realize. Thereby the invention is not limited to any particular combination of hardware and software.

The above description is just the preferred examples of the present invention, which is not used to limit the present invention, and the present invention can have various modifications and transformations for those skilled in the art. Any modifications, equivalent substitutions, and improvements, etc. within the spirit and principle of the present invention shall all fall into the protection scope of the present invention.

### Industrial Applicability

The invention can realize an upgrade without interruption of communication device service, in the process of upgrading, the communication device waiting to be upgraded is taken over and protected by the upgrade container. Before the upgrading of the communication device, the upgrade container snapshots and saves the service data during the running of the communication device; when the upgrade of communication device is interrupted, the upgrade container is in charge of taking over sending and receiving all of the message, proceeding to send the message to adjacent network elements and buffer the received message to handle after the upgrading of the communication device is finished. Under the control and protection of the upgrade container, the upgrade process of communication device is invisible to other network elements, the message interaction with the other network elements will also not be interrupted; the time point of communication device upgrade is configured at a time period with the least service amount in a day. Thus, only the message amount buffered in the upgrade container is little, and the message can be handled quickly after the upgrade is finished, there in no service interruption during the whole process of upgrading, thereby an upgrade without interruption of communication device service is realized.

## Claims

1. A method for a communication system service upgrade, comprising:
when a communication device prepares to be upgraded, an upgrade container device buffering message which currently needs to be sent to other network elements by the communication device into a sending buffer, and, when the communication device prepares to be upgraded and during an upgrade process, the upgrade container device receiving message which are transmitted to the communication device by other network elements and buffering the message into a receiving buffer;
the upgrade container device sending the message in the sending buffer to destination network elements;
thereby realizing an upgrade without interruption.

2. The method according to claim 1, further comprising the upgrade container device transmitting the message in the receiving buffer to the communication device after an upgrade of the communication device is finished.

3. The method according to claim 1 or 2, further comprising:
the upgrade container device snapshooting and saving the service data during an operation of the communication device before the communication device prepares to be upgraded and interrupts a service which is running;
the upgrade container device transmitting the saved service data to the communication device after the upgrade of the communication device is finished; the communication device recovering the received service data, and starting the interrupted service.

4. The method according to claim 3, wherein,
the step of the upgrade container device snapshooting and saving the service data during the operation of the communication device comprises: saving corresponding data structures under a running status of the communication device by entire segment into memory.

5. The method according to claim 1 or 2, further comprising:
when the communication device is in a normal running status, the upgrade container device performing a forwarding function only for interaction message between the communication device and other network elements.

6. An upgrade container device for supporting a communication system service upgrade, configured to:
buffer message which currently needs to be sent to other network elements by the communication device into a sending buffer when a communication device prepares to be upgraded;
receive message which is transmitted to the communication device by the other network elements and buffer the message into a receiving buffer when the communication device prepares to be upgraded and during an upgrade process; and,
send the message in the sending buffer to destination network elements;
thereby realizing an upgrade without interruption.

7. The device according to claim 6, wherein,
the upgrade container device is further configured to: send the message in the receiving buffer to the communication device after an upgrade of the communication device is finished.

8. The device according to claim 6 or 7, wherein:
the upgrade container device is further configured to: snapshoot and save service data during an operation of the communication device before the communication device prepares to be upgraded and interrupts a service which is running; and, transmit the saved service data to the communication device after the upgrade of the communication device is finished, so that the communication device recovers the service data and starts the interrupted service.

9. The device according to claim 8, wherein,
the upgrade container device comprises a service data snapshot memory area;
the upgrade container device is configured to save corresponding data structures under a running status of the communication device by entire segment into the service data snapshot memory area before the communication device prepares to be upgraded and interrupts the service which is running.

10. The device according to claim 6 or 7, wherein,
the upgrade container device is further configured to perform a forwarding function for interaction message between the communication device and the other network elements when the communication device is in a normal running status.
